# EUROPEAN PATENT APPLICATION

(11) **EP 1 422 771 A1**
(43) Date of publication of application: **26.05.2004**
(21) Application number: 02755837.8
(22) Date of filing: 05.08.2002
(51) Int. Cl.: H01M 2/34, H01M 2/30, H01M 2/12, H01M 2/04, H01M 10/40

(54) **NON-AQUEOUS ELECTROLYTIC SECONDARY BATTERY**

(30) Priority: 07.08.2001 JP 2001239143; 19.09.2001 JP 2001284860
(71) Applicant: MATSUSHITA ELECTRIC INDUSTRIAL CO., LTD., Kadoma-shi, Osaka 571-8501 (JP)
(72) Inventor: MASUMOTO, Kenjin, Nishinomiya-shi, Hyogo 662-0065 (JP); MURASHIGE, Shinji, Hirakata-shi, Osaka 573-0071 (JP); KONISHI, Hajime, Ikoma-shi, Nara 630-0141 (JP); TSURUTA, Kunio, Ikoma-shi, Nara 630-0213 (JP); YOSHIZAWA, Hiroshi, Hirakata-shi, Osaka 573-0151 (JP); KANEDA, Masaaki, Hirakata-shi, Osaka 573-0036 (JP); SAITO, Koji, Moriguchi-shi, Osaka 570-0014 (JP); KATAOKA, Satoshi, Osaka-shi, Osaka 536-0007 (JP)
(74) Representative: Rackham, Stephen Neil
(86) International application number: PCT/JP2002/007987
(87) International publication number: WO 2003/015195

(57) **Abstract**

The open end of a battery case (1) that houses an electrode assembly (14) is sealed with a sealing plate (3), the top of the sealing plate (3) is closed off with an insulating plate (11), and inside a concave section formed in the sealing plate (3), a positive electrode lead (12) that extends from a positive electrode plate of the electrode assembly (14) is connected in series to a thermal fuse (8) and a PTC element (9) and then to a positive electrode terminal (+). A two fold safety function is provided so that in the case of an external short-circuit across the positive and negative electrodes, excessive current is regulated by a rapid increase in the resistance of the PTC element (9) accompanying the temperature increase, whereas if a temperature increase occurs that cannot be regulated in this manner, the thermal fuse (8) fuses, breaking the circuit.

## Description

### TECHNICAL FIELD

The present invention relates to a non-aqueous electrolyte rechargeable battery, and more particularly to the provision, within the battery itself, of a function for preventing acceleration to thermal runaway when the battery is exposed to high temperature conditions.

### BACKGROUND ART

Lithium ion rechargeable batteries, which represent one example of non-aqueous electrolyte rechargeable batteries, have a high energy density and use a flammable organic solvent as the electrolyte, and consequently safety considerations are more important than for aqueous solution based batteries. Accordingly, when a fault develops for some reason, safety must be ensured to prevent injury to people or damage to equipment. For example, if a metal fragment or the like contacts both the positive electrode terminal and the negative electrode terminal, causing an external short-circuit, then in the case of a battery with a high energy density, an enormous short-circuit current flows, and the internal resistance generates Joule heat that causes the temperature of the battery to rise. When the battery reaches a high temperature, problems such as reaction between the active materials of the positive and negative electrodes and the electrolyte, and vaporization or decomposition of the electrolyte can occur, causing a rapid increase in the gas pressure within the battery, increasing the danger of rupture or ignition of the battery.

Possible causes of battery faults include not only external short-circuits, but also a variety of other electrical, mechanical and thermal causes. In non-aqueous electrolyte rechargeable batteries, including lithium ion rechargeable batteries, functions are provided for preventing the battery from slipping into an abnormal state, and for ensuring a dangerous state is not reached if the battery does fall into an abnormal state.

Examples of functions supplied within the battery itself include a device to lessen the likelihood of an excessive reaction between the active material of the electrodes and the electrolyte, wherein the separator dividing the positive electrode and the negative electrode uses a polyolefin based microporous membrane, which softens if the battery reaches an abnormally high temperature, closing the pores and preventing the flow of lithium ions, thereby providing a shutdown function that inhibits abnormal reactions.

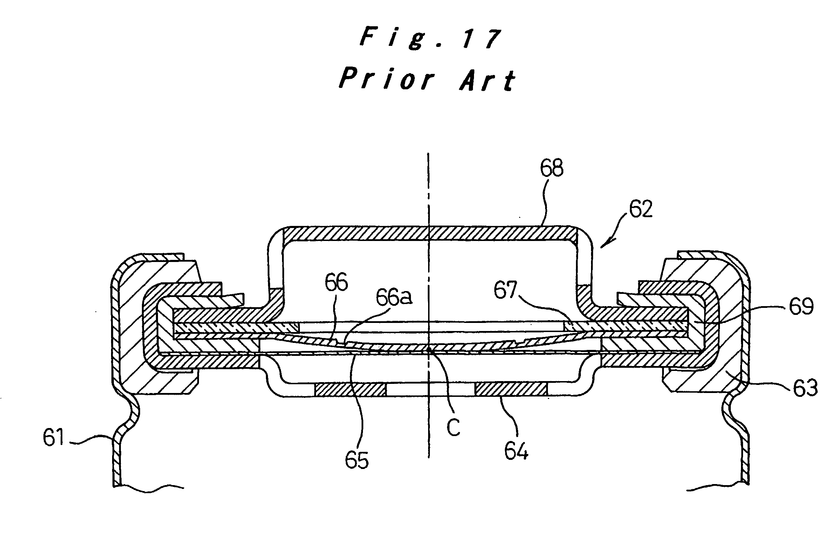

In a circular cylindrical shaped lithium ion rechargeable battery, as shown in FIG. 17, a sealing section 62 that seals the open section of a battery case 61 via a gasket 63 is formed at the external connection terminal of the positive electrode or the negative electrode, and the battery case 61 forms the external connection terminal for the counter electrode to the sealing section 62. The sealing section 62 is provided with a safety structure in which a terminal board 68 with a protrusion formed thereon, a ring shaped PTC (Positive Temperature Coefficient) element 67, a lower thin metal plate 65 that acts as an explosion proof valve, and an upper thin metal plate 66 are integrated together inside a binding plate 64 with an insulating member 69 interposed therebetween. By conducting a crimping process and folding the open end of the battery case 61 inwards, the sealing section 62 compresses the gasket 63, and the gasket 63 insulates the sealing section 62 from the battery case 61, and seals the battery case 61.

The ring shaped PTC element 67 is provided with a function for regulating excessive current and protecting the battery from external short-circuiting by undergoing self heat generation and rapidly raising the resistance when excessive current starts to flow due to a short-circuit or the like. Furthermore, the lower thin metal plate 65, and the upper thin metal plate 66 on which is formed an expansion section, are welded at their respective center points C, and if the internal pressure rises abnormally as a result of a temperature increase, the outward pressure causes the expansion section of the upper thin metal plate 66 to invert, separating the weld at the center point C, and breaking the current circuit. If the internal pressure increases even further, the upper thin metal plate 66 ruptures at the thin-walled rupture section 66a, discharging the internal pressure externally. According to this construction, the actions for current regulation, current interruption, and internal pressure discharge are executed in stages.

In addition, lithium ion rechargeable batteries are widely configured within battery packs in which the lithium ion rechargeable battery is housed inside a pack case with a PTC element and a thermal fuse (as disclosed in Japanese Patent Laid-Open Publication No. Hei 6-349480), or within battery packs in which the lithium ion rechargeable battery is housed inside a pack case with a circuit board that comprises a battery protection circuit for protecting the battery from overcharging or over discharging. Even in cases in which a lone battery is loaded into a device, a PTC element or a battery protection circuit is provided in the connected circuit.

The primary cause of a battery reaching a dangerous state is an abnormal rise in the temperature of the battery, and even in the case of the battery packs described above, a thermal fuse can be connected to the battery case, and the temperature then controlled by detecting the battery temperature with a thermistor or the like, and interrupting the input/output circuit when an abnormal battery temperature is detected. However, because detection of the battery temperature is externally conducted, a delay develops in the detection of the battery temperature, meaning the detection precision is low. Detecting the temperature within the battery and then dealing with abnormally high temperatures is the most preferred configuration. In order to realize this goal, Japanese Patent Laid-Open Publication No. Hei 9-153355 discloses a sealed type battery in which the open section of the battery case is sealed with a sealing body containing an integrated thermal fuse.

Much of the progress in reducing the size and weight, and increasing the performance of mobile telephones and PDAs (personal digital assistants) has been due to progress in lightening the size and weight of the batteries that function as the power sources, and increasing their capacity. Lithium ion rechargeable batteries are the most widely used battery power source for the types of portable equipment described above, and progress has been made in reducing the size and weight, and increasing the capacity of these batteries. Lithium ion rechargeable batteries that have been developed to deal with the reduction in size and weight of portable equipment in particular are often flat, prismatic shaped batteries designed to provide efficient use of available space when loaded into the equipment.

However, in batteries that have been reduced in size or thickness, such as the prismatic batteries described above, ensuring sufficient space for the provision of the aforementioned type of PTC element or discharge valve provided with a current cutoff mechanism is difficult, and consequently the battery is usually constructed as a battery pack, with a battery protection circuit or a PTC element provided externally to the battery, preventing the battery from falling into a dangerous state. However, as described above, detecting the temperature conditions that indicate that the battery has reached a dangerous state from an external location raises problems in terms of detection delay and detection precision, and the provision of a battery safety mechanism that operates in accordance with the temperature inside a battery of reduced size and thickness is desirable.

In this regard, the structures described above, in which a thermal fuse is provided inside the battery, operate on the basis of the temperature inside the battery, and consequently in those cases when a short-circuit leads to the battery temperature increasing, are effective in breaking the short-circuited current circuit before battery rupture or ignition occurs. However, if the fusing temperature for the thermal fuse is set to a low temperature, although the safety level improves, when the thermal fuse fuses, the battery becomes no longer usable. Accordingly, the fusing temperature of the thermal fuse is typically set to a temperature just below the temperature at which a dangerous state is reached, and the battery is often damaged before the temperature reaches that level.

An object of the present invention is to provide a non-aqueous electrolyte rechargeable battery in which safety is ensured by the battery itself even in cases where batteries have reduced size and thickness, by providing a battery safety function that operates under a plurality of temperature conditions.

### DISCLOSURE OF THE INVENTION

In order to achieve the above object, a non-aqueous electrolyte rechargeable battery according to a first aspect of the present invention includes a reversible current regulation element for regulating the current at a predetermined operating temperature and a non-reversible current cutoff element for interrupting the current at a predetermined operating temperature, which are disposed in series with a positive electrode connection line and/or a negative electrode connection line connecting a positive electrode or a negative electrode of an electrode plate housed within the battery, and a positive electrode terminal or a negative electrode terminal exposed externally on the battery.

According to the non-aqueous electrolyte rechargeable battery described above, because the reversible current regulation element and the non-reversible current cutoff element are disposed between the electrode plate and the external connection terminal, in cases such as an external short-circuit of the battery, the reversible current regulation element operates as a result of the temperature increase accompanying the short-circuit current, suppressing excessive current and preventing the battery from reaching an abnormally high temperature and becoming damaged. When the external short-circuit is removed and the temperature decreases, the reversible current regulation element returns to its original state, returning the battery to a usable state. In cases where the reversible current regulation element undergoes dielectric breakdown due to reverse charging or excessive voltage application, the non-reversible current cutoff element operates as a result of the temperature increase, breaking the circuit and preventing the battery from reaching an abnormal temperature. With this two fold safety function, the battery itself is able to prevent the battery from reaching a dangerous state as a result of a fault within the connected equipment or an external short-circuit or the like.

In a non-aqueous electrolyte rechargeable battery according to a second aspect of the present invention, a power generating element is housed in a battery case formed in the shape of a cylinder with a closed bottom, the open end of the battery case is sealed with a sealing plate with a concave section that protrudes into the case, the top of the sealing plate is closed off with an insulating plate, a positive electrode terminal and a negative electrode terminal are exposed externally from the insulating plate, and a reversible current regulation element for regulating the current at a predetermined operating temperature and a non-reversible current cutoff element for interrupting the current at a predetermined operating temperature are disposed in series with a positive electrode connection line and/or a negative electrode connection line connecting the exposed positive electrode terminal or negative electrode terminal and a positive electrode or a negative electrode of an electrode plate of the power generating element.

In this non-aqueous electrolyte rechargeable battery, the open end of the battery case is sealed with the sealing plate with a concave shaped section, and the top of the sealing plate is closed off with the insulating plate. According to this construction, the reversible current regulation element and the non-reversible current cutoff element are disposed inside the battery, and with this two fold safety function, the battery itself is able to prevent the battery from reaching a dangerous state due to a fault within the connected equipment or an external short-circuit or the like. Furthermore, because the reversible current regulation element and the non-reversible current cutoff element are housed within the dead space area that is required conventionally for lead connection purposes, housing these elements causes no reduction in space usage efficiency. In addition, if the reversible current regulation element and the non-reversible current cutoff element are housed within the concave section, problems arising from vibration or impact are also prevented.

Usually, if a battery pack is disassembled, and the batteries are removed and used, there is no guarantee that safety is maintained. However, with the non-aqueous electrolyte rechargeable batteries of the first and second aspects described above, because the safety function is provided within a single battery, safety is improved, and the battery is prevented from reaching a dangerous state.

In a non-aqueous electrolyte rechargeable battery according to a third aspect of the present invention, a power generating element is housed in a battery case formed in the shape of a cylinder with a closed bottom, the open end of the battery case is sealed with a sealing plate with a concave section that protrudes into the case, a reversible current regulation element for regulating the current at a predetermined operating temperature and a non-reversible current cutoff element for interrupting the current at a predetermined operating temperature are connected to a positive electrode connection line and/or a negative electrode connection line that connect a positive electrode lead and a negative electrode lead extending from an electrode assembly of the power generating element to a positive electrode terminal and a negative electrode terminal respectively, the reversible current regulation element and the non-reversible current cutoff element are housed within the concave section, and conducting surfaces of structural elements disposed on top of the sealing plate and connected to the positive electrode connection line and the negative electrode connection line, are exposed externally as the positive electrode terminal and the negative electrode terminal from openings formed in an insulating plate that closes over the top of the sealing plate.

According to this construction, a concave section that protrudes into the inside of the battery case is formed in the sealing plate that seals the open end of the battery case, and as a result, structural elements of the battery such as the reversible current regulation element and the non-reversible current cutoff element that act as the safety functions of the battery are housed within this concave section. Because the concave section is positioned within the dead space region between the electrode assembly inside the battery case and the sealing plate, a battery with safety functions is constructed without increasing the volume of the battery. Furthermore, the conducting surface of a structural element positioned on top of the sealing plate are exposed externally as the positive electrode terminal or the negative electrode terminal, eliminating an additional member for forming the terminal, thereby reducing the number of components and lowering costs.

### BRIEF DESCRIPTION OF THE DRAWINGS

FIG. 1 is a perspective view showing the construction of a prismatic lithium ion rechargeable battery according to first through fifth embodiments of the present invention;
FIG. 2 is a partial sectional view showing the construction of a lithium ion rechargeable battery according to the first embodiment;
FIG. 3 is a circuit diagram for the construction of the same battery;
FIG. 4 is a partial sectional view showing the construction of a lithium ion rechargeable battery according to the second embodiment;
FIG. 5 is a circuit diagram for the construction of the same battery;
FIG. 6 is a partial sectional view showing the construction of a lithium ion rechargeable battery according to the third embodiment;
FIG. 7 is a partial sectional view showing the construction of a lithium ion rechargeable battery according to the fourth embodiment;
FIG. 8 is a partial sectional view showing the construction of a lithium ion rechargeable battery according to the fifth embodiment;
FIG. 9 is a circuit diagram for the construction of the same battery;
FIG. 10 is a perspective view showing the construction of abnormal internal pressure discharge means using a scribe;
FIG. 11 is a partial sectional view showing the construction of abnormal internal pressure discharge means using a clad structure;
FIG. 12 is a perspective view showing the construction of a prismatic lithium ion rechargeable battery according to a sixth embodiment;
FIG. 13 is a partial sectional view showing the construction of the same battery;
FIG. 14A is a cross-sectional view along the arrow headed line A-A shown in FIG. 13, FIG. 14B is a cross-sectional view along the arrow headed line B-B shown in FIG. 13, and FIG. 14C is a cross-sectional view along the arrow headed line C-C shown in FIG. 13;
FIG. 15 is a circuit diagram for the construction of the same battery;
FIG. 16A through FIG. 16C are cross-sectional views showing the formation of sealing plates by press working; and
FIG. 17 is a partial sectional view showing a conventional safety structure.

### BEST MODE FOR CARRYING OUT THE INVENTION

As follows is a description of embodiments of the present invention, with reference to the appended drawings, which will contribute to the understanding of the invention. The embodiments shown below are merely specific examples of the present invention, and in no way restrict the technical scope of the present invention.

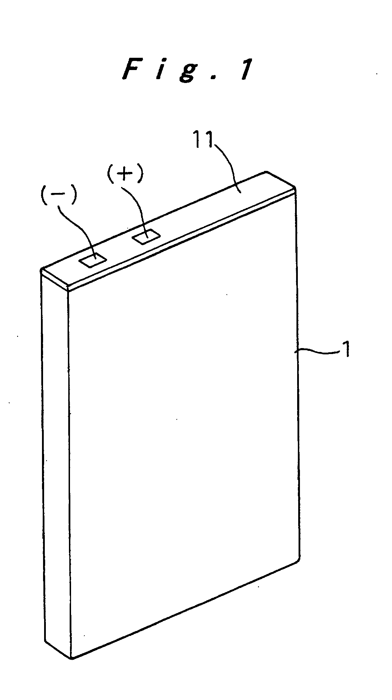

The embodiments of the present invention are lithium ion batteries that represent examples of non-aqueous electrolyte rechargeable batteries, and as shown in FIG. 1, are formed as flat, prismatic batteries.

FIG. 1 shows the external appearance of a lithium ion rechargeable battery according to the embodiments of the present invention, wherein a power generating element is housed inside a battery case 1 formed of nickel plated steel sheet in the shape of a prismatic cylinder with a bottom, the open end of the battery case 1 is sealed with a sealing plate 3 that is described below, and a positive electrode terminal (+) and a negative electrode terminal (-) provided on the sealing plate 3 are exposed externally through openings formed in an insulating plate 11 that closes the top of the sealing plate 3.

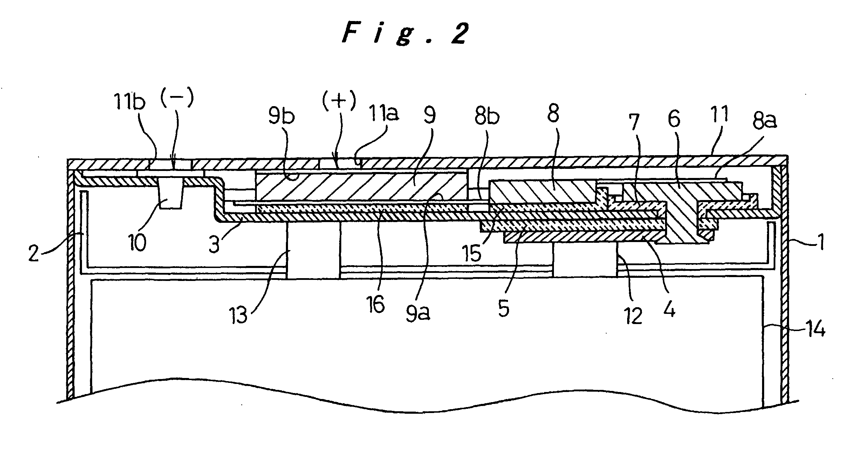

FIG. 2 is a partial sectional view of the lithium ion rechargeable battery according to a first embodiment, and shows the upper section of the battery. An electrode assembly 14 comprising a wound positive electrode and negative electrode with a separator interposed therebetween is housed inside the battery case 1, and is secured in position by a frame 2 that prevents the electrode assembly from moving from its housed location. A sealing plate 3 with a concave section that protrudes into the case 1 is fitted inside the open end of the battery case 1, and by laser welding the outside edges of the sealing plate 3 to the battery case 1, the open end of the battery case 1 is sealed. In one of two openings formed on either side of the sealing plate 3, a rivet 6 is secured with an attached washer 4, with an upper gasket 7 and a lower gasket 5 insulating the rivet from the sealing plate 3 and ensuring good sealing. The other opening is for injecting the electrolyte into the battery case 1, and following injection of the electrolyte, a plug 10 is inserted into the opening and then welded to the sealing plate 3 to close the opening.

A positive electrode lead 12 extending from the positive electrode plate of the electrode assembly 14 is welded to the washer 4, and a negative electrode lead 13 extending from the negative electrode plate is welded to the bottom surface of the sealing plate 3. Inside the concave section of the sealing plate 3 are disposed a thermal fuse (a non-reversible current cutoff element) 8 that is insulated from the sealing plate 3, which is at the negative electrode potential, by an insulating member 15, and a PTC element (a reversible current regulation element) 9 that is insulated from the sealing plate 3 by an insulating member 16. One lead 8a from the thermal fuse 8 is connected to the rivet 6, and the other lead 8b is connected to the lower electrode plate 9a of the PTC element 9. The material used for the insulating members 15, 16 is preferably PP (polypropylene) or PPS (polyphenylene sulfide), and this embodiment uses resin molded members formed from such a material.

As shown in the figure, the upper section of the sealing plate 3 is closed off by the insulating plate 11 provided with a positive electrode opening 11a and a negative electrode opening 11b. The upper electrode plate 9b of the PTC element 9 is exposed externally through the positive electrode opening 11a and is used as a positive electrode terminal, and the plug 10 is exposed externally from the negative electrode opening 11b and is used as a negative electrode terminal.

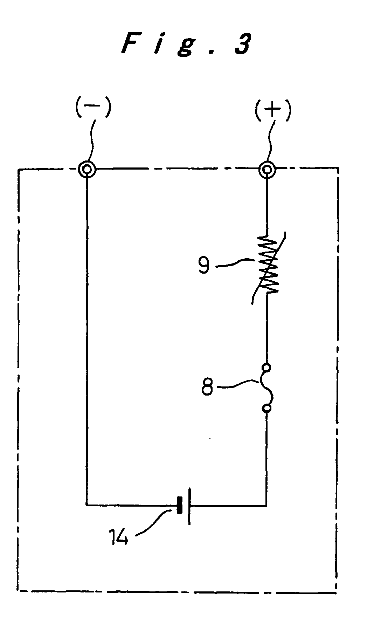

As described above, the positive electrode plate of the electrode assembly 14 is connected to the positive electrode terminal (+) via the positive electrode lead 12, the washer 4, the rivet 6, the thermal fuse 8, and the PTC element 9, whereas the negative electrode plate is connected to the negative electrode terminal (-) via the negative electrode lead 13, the sealing plate 3, and the plug 10. In other words, as shown by the circuit diagram in FIG. 3, the thermal fuse 8 and the PTC element 9 are connected in series between the positive electrode plate of the electrode assembly 14 and the positive electrode terminal (+), and are provided inside the lithium ion rechargeable battery.

The PTC element 9 is constructed by forming a PTC conductive polymer, comprising conductive carbon dispersed within an organic polymer material, into a flat plate shape, and then attaching the upper electrode plate 9b and the lower electrode plate 9a to the upper and lower surfaces respectively. The resistance between the upper electrode plate 9b and the lower electrode plate 9a is a low resistance of no more than 0.1 Ω under normal conditions, but if an operating temperature reaches a predetermined value (the trip temperature), the resistance increases rapidly to 10⁴ to 10⁶ Ω. Furthermore, the thermal fuse 8 is a low melting point alloy that melts at a predetermined operating temperature, with the leads 8a, 8b attached to either end, so that when the alloy melts at the predetermined operating temperature, continuity between the two leads 8a, 8b is broken.

In the above configuration, the operating temperature for the thermal fuse 8 is set to 100 to 130°C, and the operating temperature for the PTC element 9, namely the trip temperature, is set to 80 to 100°C. If the trip temperature for the PTC element 9 is set to 80°C and the operating temperature for the thermal fuse 8 is set to 100°C, then in the case of a fault within the equipment in which the lithium ion rechargeable battery has been loaded, or an external short-circuit where a piece of metal is connected across the positive electrode terminal (+) and the negative electrode terminal (-), the excessive short-circuit current causes the temperature of the PTC element 9 to rise, and when the temperature reaches the trip temperature at 80°C, the resistance of the PTC element 9 increases rapidly, immediately limiting the short-circuit current, and preventing the battery from reaching a dangerous state. When the short-circuit is removed, the excessive short-circuit current disappears and the temperature of the PTC element 9 falls, releasing the tripped state and lowering the resistance, thereby enabling normal use of the battery to be resumed.

Furthermore, if a high voltage is applied as a result of a fault or the like within the equipment in which the lithium ion rechargeable battery is loaded, then in cases where reverse charging occurs, if the PTC element 9 undergoes dielectric breakdown, meaning the function for regulating the current is inoperable, then when the temperature of the battery rapidly increases to reach 100°C, the thermal fuse 8 fuses, preventing the battery from reaching a dangerous state even when the PTC element 9 is inoperable. This type of two fold safety function enables a lithium ion rechargeable battery with a high energy density to be used safely.

In addition, in certain cases, such as if the battery or equipment in which the battery is loaded is left sitting in a parked car sitting in the mid-summer sun, the temperature of the battery may exceed 80°C. In such cases, the PTC element 9 is tripped and the resistance increases, making use of the battery impossible, and preventing the battery from being used in a state of abnormal temperature. If the battery is returned to a normal temperature environment, the PTC element 9 is restored to normal from the tripped state, and normal use of the battery can be resumed. If the battery is exposed to temperatures exceeding 100°C, there is a danger of the electrolyte and the electrode active material degenerating under the heat, making the normal charging and discharging reactions impossible. In such cases, the thermal fuse 8 fuses, making use of the battery impossible, and preventing the battery from reaching a dangerous state.

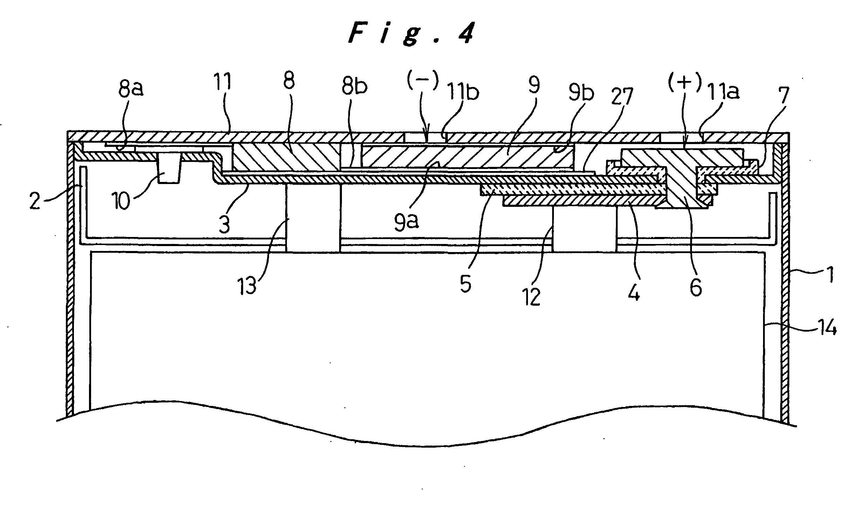

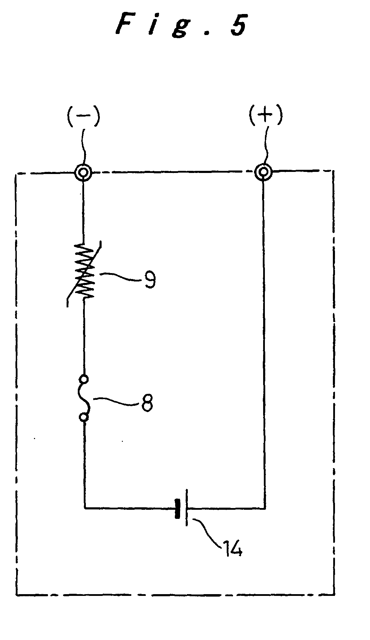

Next is a description of a lithium ion rechargeable battery according to a second embodiment of the present invention. FIG. 4 shows the construction of the second embodiment, and those structural elements that perform identical actions to the first embodiment are labeled with the same symbols. In this embodiment, the thermal fuse 8 and the PTC element 9 are disposed between the negative electrode plate and the negative electrode terminal (-), as shown in the circuit diagram of FIG. 5.

In FIG. 4, the positive electrode lead 12 extending from the positive electrode plate of the electrode assembly 14 is welded to the washer 4, which is secured by the rivet 6 that is attached to the sealing plate 3, with an upper gasket 7 and a lower gasket 5 insulating the rivet from the sealing plate 3 and ensuring good sealing. Accordingly, the positive electrode plate of the electrode assembly 14 is connected through the positive electrode lead 12, the washer 4, and the rivet 6, and the upper flat surface of the rivet 6 is used as the positive electrode terminal, which can be connected externally through the positive electrode opening 11a formed in the insulating plate 11.

In contrast, the negative electrode lead 13 extending from the negative electrode plate of the electrode assembly 14 is welded to the bottom surface of the sealing plate 3. One lead 8a from the thermal fuse 8 disposed inside the concave section of the sealing plate 3 is connected to the plug 10, which is used for closing the opening formed in the sealing plate 3 for injecting the electrolyte, and is welded to the sealing plate 3, whereas the other lead 8b from the thermal fuse 8 is connected to the lower electrode plate 9a of the PTC element 9. The PTC element 9 is disposed so that the upper electrode plate 9b is positioned beneath the negative electrode opening 11b formed in the insulating plate 11. Accordingly, the negative electrode plate of the electrode assembly 14 is connected through the negative electrode lead 13, the sealing plate 3, the plug 10, the thermal fuse 8, and the PTC element 9, and the upper electrode plate of the PTC element 9 is used as the negative electrode terminal, which can be connected externally through the negative electrode opening 11b formed in the insulating plate 11.

The thermal fuse 8 and the PTC element 9 are insulated from the sealing plate 3 by an insulating film 27, with the thermal fuse 8 and the PTC element 9 connected in a series connection circuit. The insulating film 27 can be formed from PP or PPS, and because the thermal fuse 8 and the PTC element 9 are pressed against the sealing plate 3 with the insulating film 27 disposed therebetween, the battery temperature is conveyed rapidly, enabling highly precise temperature control.

In this second embodiment, because the thermal fuse 8 and the PTC element 9 are provided on the negative electrode side of the structure, they have the same potential as the sealing plate 3, which sits at the potential of the negative electrode, and consequently, the construction of the insulation can be simple, and can be provided by simply applying a silicon resin to the thermal fuse 8 and the PTC element 9. Silicon resins have excellent thermal conductivity, and so the thermal fuse 8 and the PTC element 9 can be integrated with the sealing plate 3, enabling temperature control to be executed faster, and with greater precision.

In the second embodiment, the thermal fuse 8 and the PTC element 9 are connected in series between the negative electrode plate and the negative electrode terminal (-), as shown in FIG. 5, and consequently the thermal fuse 8 and the PTC element 9 are connected in series within the input-output circuit of the battery, in a similar manner to the first embodiment, and the same functions are achieved.

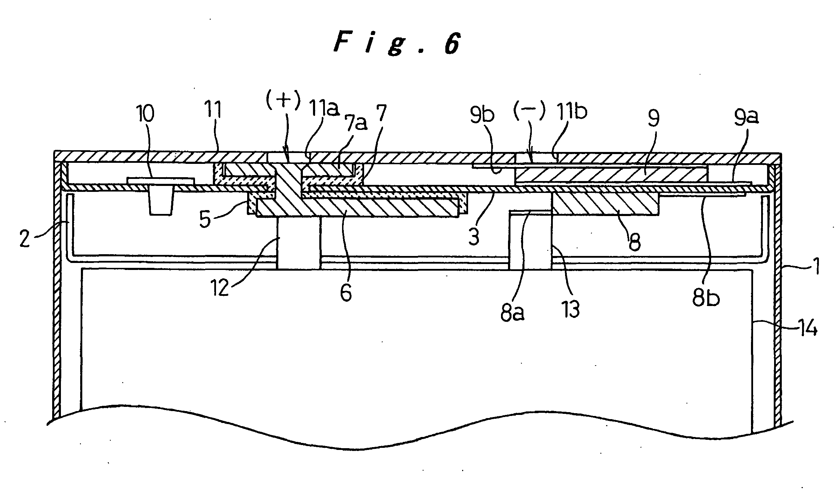

Next is a description of a lithium ion rechargeable battery according to a third embodiment of the present invention. FIG. 6 shows the construction of the third embodiment, and those structural elements that perform identical actions to the first and second embodiments are labeled with the same symbols. A feature of this embodiment is that the thermal fuse 8 is disposed on a side of the sealing plate 3, the side which faces the inside of the battery case 1, meaning increases in the battery temperature are detected more rapidly, and operations are carried out more rapidly.

In FIG. 6, the open end of the battery case 1 housing the electrode assembly 14 is sealed by laser welding to the edges of a sealing plate 3 that is formed with a concave section that extends across the entire sealing plate, and the upper section of the sealing plate 3 is closed off with an insulating plate 11 that is provided with a positive electrode opening 11a and a negative electrode opening 11b. The positive electrode lead 12 extending from the positive electrode plate of the electrode assembly 14 is welded to the lower surface of the rivet 6, which is secured in an opening in the sealing plate 3, with an upper gasket 7 and a lower gasket 5 insulating the rivet from the sealing plate 3 and ensuring good sealing. A spacer 7a that occupies the space around the neck section of the rivet 6 is disposed on top of the upper gasket 7. The top edge of the rivet 6 is positioned beneath the positive electrode opening 11a provided in the insulating plate 11, and is used as the positive electrode terminal.

In contrast, the negative electrode lead 13 extending from the negative electrode plate of the electrode assembly 14 is welded to one lead 8a from the thermal fuse 8, which is disposed on the inside of the battery case 1 from the sealing plate 3. The other lead 8b from the thermal fuse 8 is connected to the bottom surface of the concave section of the sealing plate 3. The lower electrode plate 9a of the PTC element 9 is connected to the upper surface of the sealing plate 3, and the upper electrode plate 9b of the PTC element 9 is positioned beneath the negative electrode opening 11b provided in the insulating plate 11, and is used as the negative electrode terminal. In other words, the negative electrode plate is connected to the negative electrode terminal via the negative electrode lead 13, the thermal fuse 8, the sealing plate 3, and the PTC element 9.

The circuit of this construction is similar to that of the second embodiment, in that the thermal fuse 8 and the PTC element 9 are connected in series within the negative electrode circuit, but in this construction, the thermal fuse 8 is provided on a side of the sealing plate 3, which faces the inside of the battery case 1, and is consequently positioned closer to the power generating element that causes temperature increase, thereby offering excellent operational speed and detection precision based on temperature detection.

When the thermal fuse 8 is provided inside the battery case 1, the thermal fuse 8 contacts the electrolyte contained in the battery case 1. Accordingly, the thermal fuse 8 is covered with an insulating resin that is chemically stable when in contact with the electrolyte. Furthermore, when the thermal fuse 8 is provided inside the battery case 1, it is preferably connected in series with the negative electrode circuit, because the negative electrode circuit displays only a small potential difference relative to the electrolyte, thereby inhibiting corrosion by the electrolyte.

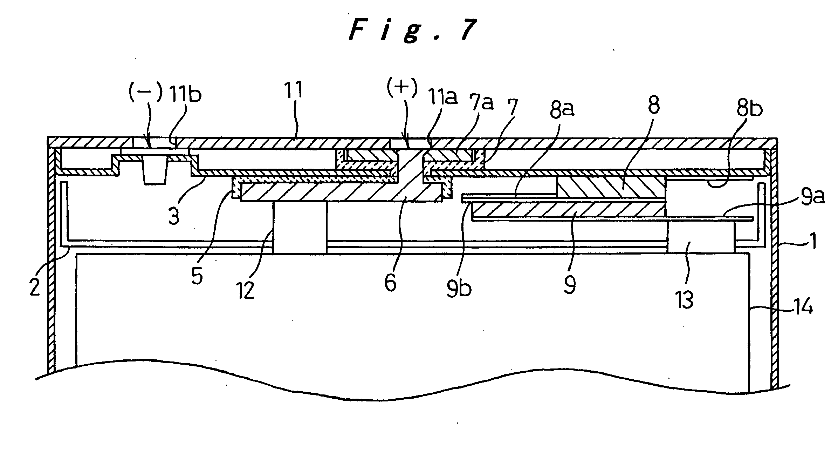

Next is a description of a lithium ion rechargeable battery according to a fourth embodiment of the present invention. FIG. 7 shows the construction of the fourth embodiment, and those structural elements that perform identical actions to the first, second and third embodiments are labeled with the same symbols. A feature of this embodiment is that both the thermal fuse 8 and the PTC element 9 are disposed on a side of the sealing plate 3, which faces the inside of the battery case 1, thereby detecting increases in the battery temperature more rapidly, and carrying out operation more rapidly.

In FIG. 7, the open end of the battery case 1 housing the electrode assembly 14 is sealed by laser welding to the edges of a sealing plate 3 with a concave section, and the upper section of the sealing plate 3 is closed off with an insulating plate 11 that is provided with a positive electrode opening 11a and a negative electrode opening 11b. The positive electrode lead 12 extending from the positive electrode plate of the electrode assembly 14 is welded to the lower surface of the rivet 6, which is secured in an opening in the sealing plate 3, with an upper gasket 7 and a lower gasket 5 insulating the rivet from the sealing plate 3 and ensuring good sealing. A spacer 7a that occupies the space around the neck section of the rivet 6 is disposed on top of the upper gasket 7. The top edge of the rivet 6 is positioned beneath the positive electrode opening 11a provided in the insulating plate 11, and is used as the positive electrode terminal (+).

In contrast, the negative electrode lead 13 extending from the negative electrode plate of the electrode assembly 14 is welded to the lower electrode plate 9a of the PTC element 9, which is disposed on the inside of the battery case 1 from the sealing plate 3, the upper electrode plate 9b of the PTC element 9 is welded to one lead 8a from the thermal fuse 8, and the other lead 8b from the thermal fuse 8 is connected to the bottom surface of the concave section of the sealing plate 3. The plug 10 that is used to close the opening formed in the sealing plate 3 for injecting electrolyte into the case is positioned beneath the negative electrode opening 11b provided in the insulating plate 11, and is used as the negative electrode terminal. In other words, the negative electrode plate is connected to the negative electrode terminal via the negative electrode lead 13, the PTC element 9, the thermal fuse 8, the sealing plate 3, and the plug 10.

The circuit of this construction is similar to that of the second embodiment, in that the thermal fuse 8 and the PTC element 9 are connected in series within the negative electrode circuit as shown in FIG. 5, but in this construction, the thermal fuse 8 and the PTC element 9 are both disposed inside the battery case 1, and are consequently positioned closer to the power generating element that causes temperature increase, thereby offering excellent operational speed and detection precision based on temperature detection.

When the thermal fuse 8 and the PTC element 9 are disposed inside the battery case 1, the thermal fuse 8 and the PTC element 9 contact the electrolyte contained in the battery case 1. Accordingly, the thermal fuse 8 and the PTC element 9 are covered with an insulating resin that is chemically stable when in contact with the electrolyte. Furthermore, the thermal fuse 8, which is provided inside the battery case 1 and contacts the electrolyte, is preferably connected in series with the negative electrode circuit because the negative electrode circuit displays only a small potential difference relative to the electrolyte, thereby inhibiting corrosion by the electrolyte.

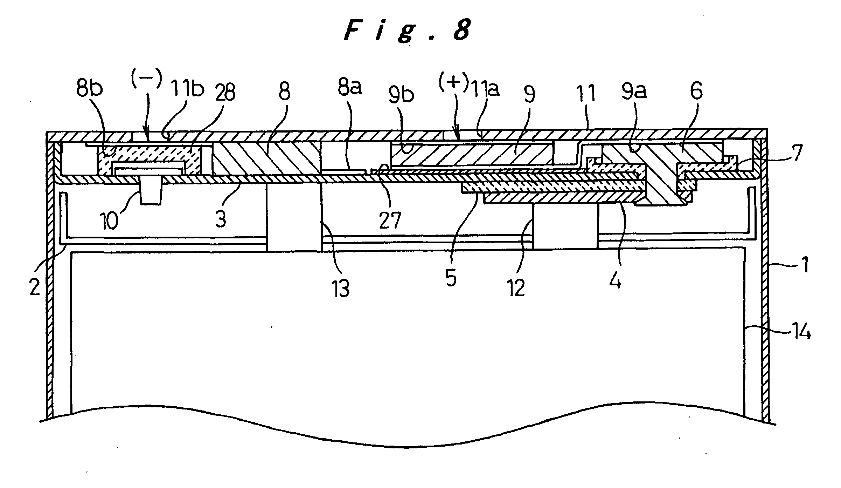

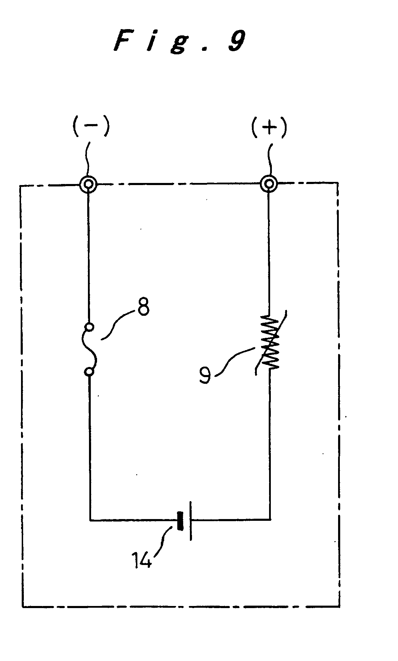

Next is a description of a lithium ion rechargeable battery according to a fifth embodiment of the present invention. FIG. 8 shows the construction of the fifth embodiment, and those structural elements that perform identical actions to the first through fourth embodiments are labeled with the same symbols. As shown in the circuit diagram of FIG. 9, in this embodiment, the PTC element 9 is provided between the positive electrode plate and the positive electrode terminal (+), the thermal fuse 8 is provided between the negative electrode plate and the negative electrode terminal (-), and thermal conduction to the thermal fuse 8 and the PTC element 9 is improved.

In FIG. 8, the positive electrode lead 12 extending from the positive electrode plate of the electrode assembly 14 housed inside the battery case 1 is welded to the washer 4, which is secured by the rivet 6 that is attached to the sealing plate 3, which is formed with a concave section that extends across the entire sealing plate, with an upper gasket 7 and a lower gasket 5 insulating the rivet from the sealing plate 3 and ensuring good sealing. The upper surface of the rivet 6 is connected to the lower electrode plate 9a of the PTC element 9, which is disposed on top of the sealing plate 3 with an insulating film 27 disposed therebetween. The upper electrode plate 9b of the PTC element 9 is positioned beneath the positive electrode opening 11a formed in the insulating plate 11. Accordingly, the positive electrode plate of the electrode assembly 14 is connected through the positive electrode lead 12, the washer 4, the rivet 6, and the PTC element 9, and so the upper electrode plate 9b of the PTC element 9 is used as the positive electrode terminal, and can be connected externally from the positive electrode opening 11a formed in the insulating plate 11. Because the PTC element 9 is pressed against the sealing plate 3 with the thin insulating film 27 disposed therebetween, heat transference of the battery temperature is good, enabling the response speed and precision of temperature related operations to be improved.

In contrast, the negative electrode lead 13 extending from the negative electrode plate of the electrode assembly 14 is welded to the bottom surface of the concave section of the sealing plate 3. The thermal fuse 8 is disposed directly on top of the sealing plate 3, one lead 8a therefrom is connected to the sealing plate 3, and by positioning the other lead 8b on top of an insulating stand 28 that is positioned so as to cover the plug 10 used for closing the electrolyte injection opening, the lead 8b can be positioned beneath the negative electrode opening 11b formed in the insulating plate 11. Accordingly, the negative electrode plate of the electrode assembly 14 is connected through the negative electrode lead 13, the sealing plate 3, and the thermal fuse 8, and the other lead 8b from the thermal fuse 8 is used as the negative electrode terminal, and can be connected externally from the negative electrode opening 11b formed in the insulating plate 11. In this construction, the thermal fuse 8 contacts the sealing plate 3 directly, and consequently, heat transference of the battery temperature to the thermal fuse 8 is rapid, and when the battery temperature rises abnormally, the thermal fuse 8 fuses rapidly at the preset operating temperature, causing interruption of the current.

As shown in FIG. 9, in the fifth embodiment, the PTC element 9 is disposed in series between the positive electrode of the electrode assembly 14 and the positive electrode terminal (+), and the thermal fuse 8 is disposed in series between the negative electrode of the electrode assembly 14 and the negative electrode terminal (-), and so the thermal fuse 8 is attached directly to the sealing plate 3, improving the thermal conduction to the thermal fuse 8.

Regardless of whether the thermal fuse 8 and the PTC element 9 are positioned within the positive electrode side, within the negative electrode side, or split between the positive electrode and the negative electrode sides as in the fifth embodiment, they are still connected in series within the input-output circuit of the battery, and consequently display the same functions.

As shown in each of the embodiments described above, because a sealing plate 3 with a concave section is provided within the dead space that conventionally exists for connecting of the positive electrode lead 12 and the negative electrode lead 13, and because the thermal fuse 8 and the PTC element 9 are disposed within that concave section, the dead space is effectively utilized, and a two fold safety function is provided without reducing space usage efficiency or increasing the size of the battery. Furthermore, because the thermal fuse 8 and the PTC element 9 are disposed within the concave section and are integrally connected to the sealing plate 3, problems arising from vibration or impact are prevented.

In addition, in each of the embodiments described above, the reversible current regulation element provided by the PTC element 9 could also be constructed using a bimetal that deforms at or above a predetermined operating temperature, thereby opening the contact, and then returns to its normal state and closes the contact when the temperature drops. Furthermore, the non-reversible current cutoff element provided by the thermal fuse 8 could also be constructed using a switch employing a shape memory alloy that returns to a memory shape at or above a predetermined operating temperature, thereby opening the contact and cutting off the current circuit.

Furthermore, in addition to the two fold safety function provided by the PTC element 9 and the thermal fuse 8, an abnormal internal pressure discharge structure for discharging abnormal internal pressure externally when the pressure inside the battery case 1 rises abnormally can also be provided, thereby forming a three fold safety function. This abnormal internal pressure discharge structure could utilize a configuration in which a section of the battery case 1 is reduced in thickness, either by scribing or imprinting, and this thin-walled section then ruptures with the internal pressure, a configuration that utilizes a valve that is operated by internal pressure, or a configuration in which the thin plate section of a clad plate ruptures with the internal pressure.

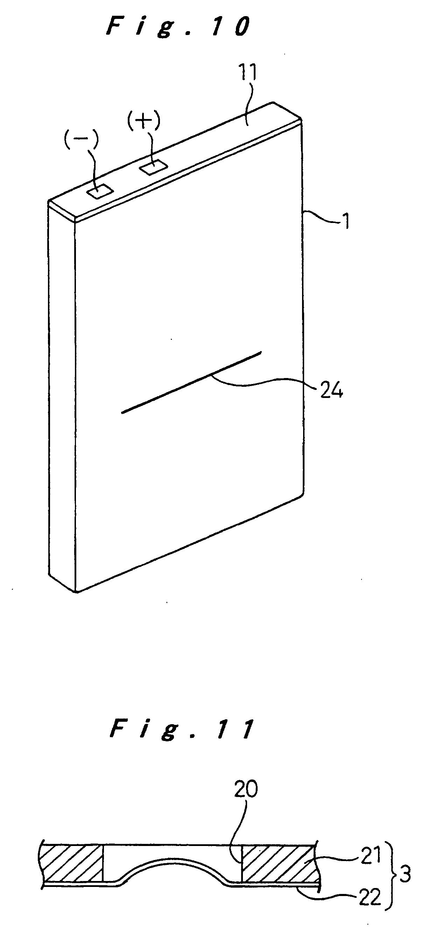

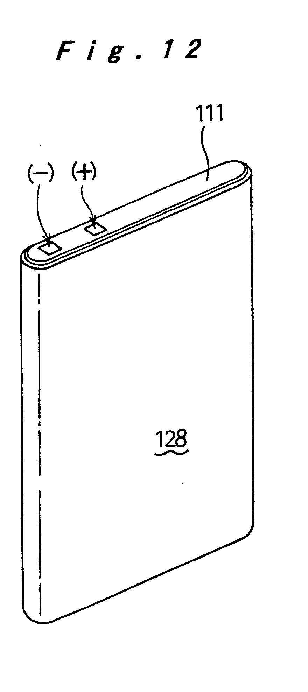

In the lithium ion rechargeable batteries of these embodiments, which have been reduced in size and thickness as shown in FIG. 1, the abnormal internal pressure discharge structure is preferably a structure that occupies little space, and the configurations shown in FIG. 10 and FIG. 11 are ideal.

FIG. 10 shows an example of an abnormal internal pressure discharge structure in which a thin-walled section 24 is formed by scribing the body of the battery case 1. The thin-walled section 24 is formed as a groove that reduces the thickness of the battery case 1 to 60 to 90% of normal. If the internal pressure increases abnormally as a result of gas generation accompanying a temperature increase, then when the internal pressure exceeds the rupture strength of the battery case 1 at the thin-walled section 24, the battery case 1 ruptures from the thin-walled section 24, discharging the abnormal internal pressure externally and preventing dangerous explosive situations. This thin-walled section 24 can be formed not only in the body of the case 1 as described above, but can also be formed in the bottom surface of the battery case. Furthermore, the formation of a partial, thin-walled section can also be achieved by imprinting. Imprinting involves striking the side surface of the battery case 1 with an arbitrary shape to reduce the thickness of the case to 80 to 90% of normal, and provides the same effects as the thin-walled section 24.

FIG. 11 shows another an abnormal internal pressure discharge structure wherein the sealing plate 3 is formed from a clad plate in which an aluminum plate 22 is bonded to a stainless steel plate 21, and a discharge aperture 20 is provided at a predetermined position within the stainless steel plate 21, so that the discharge aperture 20 is sealed with the thin aluminum plate 22. If the internal pressure increases abnormally as a result of gas generation accompanying a temperature increase, then when the internal pressure exceeds the rupture strength of the aluminum plate 22, the aluminum plate 22 sealing the discharge aperture 20 ruptures, discharging the abnormal internal pressure externally and preventing dangerous explosive situations. By forming the aluminum plate 22 as a spherical surface that protrudes into the aperture 20, as shown in the figure, the pressure is concentrated onto the spherical surface, ensuring a stable rupturing process. This abnormal internal pressure discharge structure is formed at a location where it is not obstructed by the structural elements provided on top of the sealing plate 3.

The abnormal internal pressure discharge structures shown in the above examples are constructed so that in cases in which even though the thermal fuse 8 has fused, the battery temperature has still reached a temperature of 100°C or greater, the discharge process is initiated as a result of the rise in internal pressure accompanying gas generation. Accordingly, the structure acts as a final safety function, for those cases in which the actions of the reversible current regulation element and the non-reversible current cutoff element have not functioned normally. Thereby, a lithium ion rechargeable battery with a third safety function, in addition to the PTC element 9 and the thermal fuse 8, is produced, and because a further safety function that relies on separator shutdown operates at a temperature of approximately 150°C, a battery with a high energy density is used safely.

Each of the above embodiments describes a case in which a battery case 1 using nickel plated steel was formed in a flat, prismatic shape, but aluminum alloy or stainless steel can also be used, and the examples can also be applied to batteries formed in a cylindrical shape.

Next is a description of a lithium ion rechargeable battery according to a sixth embodiment of the present invention. FIG. 12 shows a lithium ion rechargeable battery according to the sixth embodiment, wherein a power generating element is housed inside a battery case that is formed from nickel plated steel, in the shape of a cylinder with a closed bottom and with an elliptical cross-section, the open section of the battery case is sealed with a sealing plate 103 described below, and the members that form the positive electrode terminal (+) and the negative electrode terminal (-) provided on top of the sealing plate 103 are exposed externally through openings formed in an insulating plate 111 that closes off the sealing plate 103. The circumferential surface of the battery case, including the edges of the insulating plate 111, is covered with an outer packaging film 128, which is used for displaying information such as the name of the manufacturer, the product number, and any warnings to consumers.

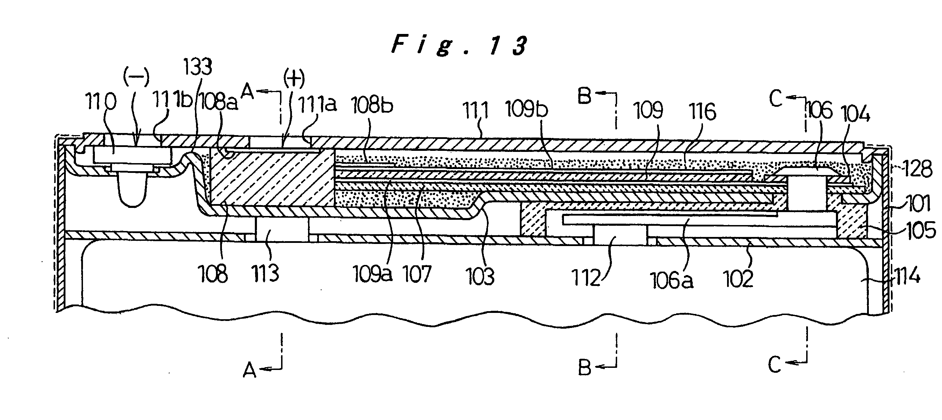

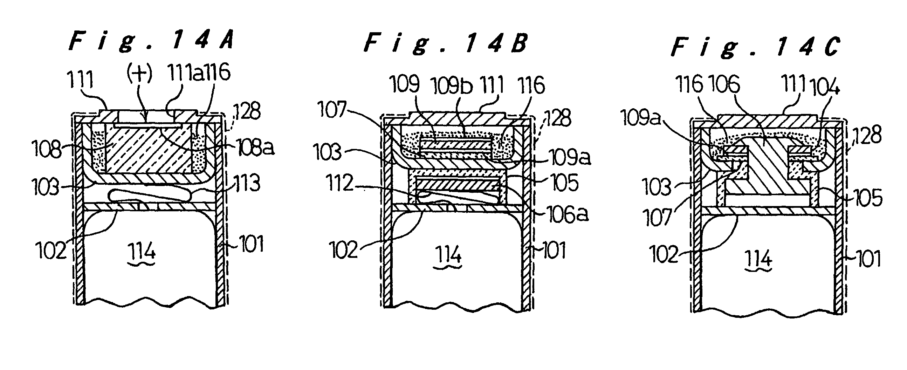

FIG. 13 and FIG. 14A through FIG. 14C are partial sectional views of the lithium ion rechargeable battery described above, wherein FIG. 14A, FIG. 14B and FIG. 14C are cross-sectional views along the arrow headed lines A-A, B-B and C-C respectively shown in FIG. 13, showing the internal construction of the upper section of the battery. An electrode assembly 114 including a wound positive electrode and negative electrode with a separator interposed therebetween is housed inside a battery case 101, and is secured in position by a frame 102 that prevents the electrode assembly from moving from its housed location. A sealing plate 103 with a concave section that protrudes into the case is fitted inside the open end of the battery case 101, and by laser welding the outside edges of the sealing plate to the battery case 101, the open end of the battery case 101 is sealed. In one of two openings formed in either side of the sealing plate 103, a rivet 106 is secured with an attached washer 104 and a lower electrode plate 109a of a PTC element 109 described below, with an upper gasket 107 and a lower gasket 105 insulating the rivet from the sealing plate 103 and ensuring good sealing. The other opening is for injecting electrolyte into the battery case 101 following attachment of the sealing plate 103 to the battery case 101, and following injection of the electrolyte, a plug 110 is inserted into the opening and then welded to the sealing plate 103 to close the opening. By covering the structural elements disposed on top of the sealing plate 103 with a resin material 116, the elements are covered with, and secured by an insulating body, so that even if a vibration or impact is applied to the battery the structural elements are protected, and the insulation is improved, while the thermal conductivity also improves.

A positive electrode lead 112 extending from the positive electrode plate of the electrode assembly 114 is welded to an extension 106a of the rivet 106, whereas a negative electrode lead 113 extending from the negative electrode plate is welded to the bottom surface of the sealing plate 103. Inside the concave section of the sealing plate 103 are disposed the PTC element (the reversible current regulation element) 109, which is insulated from the sealing plate 103 by the upper gasket 107, and a resin molded thermal fuse (a non-reversible current cutoff element) 108. The thermal fuse 108 is formed by encasing an alloy having a low melting point that fuses at a predetermined operating temperature in a resin mold, thereby protecting the alloy and stabilizing the thermal conductivity. One end of the alloy is connected to a terminal plate 108a that is positioned at the upper surface of the resin mold, and the other end of the alloy extends out of the resin mold as a lead plate 108b. This lead plate 108b is soldered to an upper electrode plate 109b of the aforementioned PTC element 109.

As shown in the figure, the upper section of the sealing plate 103 is closed off by the insulating plate 111, which is provided with a positive electrode opening 111a and a negative electrode opening 111b. The terminal plate 108a of the thermal fuse 108 is exposed externally through the positive electrode opening 111a and is used as the positive electrode terminal, and the top surface of the plug 110 is exposed externally from the negative electrode opening 111b and is used as the negative electrode terminal. This configuration eliminates additional members for forming the positive electrode terminal and the negative electrode terminal.

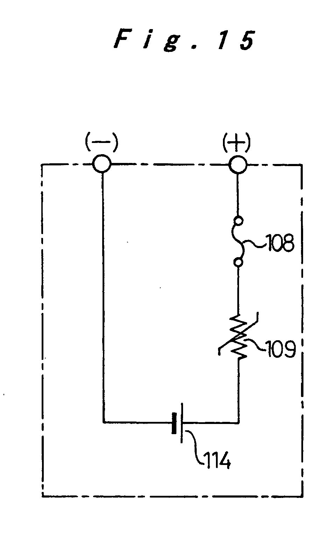

As described above, the positive electrode plate of the electrode assembly 114 is connected to the positive electrode terminal (+) via the positive electrode lead 112, the rivet 106, the PTC element 109, and the thermal fuse 108, whereas the negative electrode plate is connected to the negative electrode terminal (-) via the negative electrode lead 113, the sealing plate 103, and the plug 110. In other words, as shown by the circuit diagram in FIG. 15, a lithium ion rechargeable battery is formed in which the thermal fuse 108 and the PTC element 109 are connected in series between the positive electrode plate of the electrode assembly 14 and the positive electrode terminal (+).

In the above configuration, the operating temperature for the thermal fuse 108 is set to 100 to 130°C, and the operating temperature for the PTC element 109, namely the trip temperature, is set to 80 to 100°C. If the trip temperature for the PTC element 109 is set to 80°C and the operating temperature for the thermal fuse 108 is set to 100°C, then in the case of a fault within the equipment in which the lithium ion rechargeable battery has been loaded, or an external short-circuit where a piece of metal is connected across the positive electrode terminal (+) and the negative electrode terminal (-), the excessive short-circuit current causes the temperature of the PTC element 109 to rise. When the temperature reaches the trip temperature of 80°C, the resistance of the PTC element 109 increases rapidly, thereby immediately limiting the short-circuit current, and preventing the short-circuit from causing the battery to reach a dangerous state. When the short-circuit is removed, the excessive short-circuit current disappears and the temperature of the PTC element 109 falls, releasing the tripped state and lowering the resistance, thereby enabling normal use of the battery to be resumed.

Furthermore, if a high voltage is applied as a result of a fault or the like within the equipment in which the lithium ion rechargeable battery is loaded, then in cases where reverse charging occurs, if the PTC element 109 undergoes dielectric breakdown, meaning the function for regulating the current is inoperable, then when the rapid increase in the temperature of the battery causes the temperature to reach 100°C, the thermal fuse 108 fuses, preventing the battery from reaching a dangerous state even when the PTC element 109 is inoperable. This type of two fold safety function enables a lithium ion rechargeable battery with a high energy density to be used safely.

The thermal fuse 108 and the PTC element 109 are integrated into a single composite part before being attached to the top of the sealing plate 103, and by then inserting the axial section of the rivet 106 in a hole formed in the lower electrode plate 109a of the PTC element 109, and fastening the rivet 106 to the sealing plate 103 with the upper gasket 107 and the lower gasket 105 positioned therebetween, the above composite part is connected electrically and fixed to the top of the sealing plate 103.

Production of a battery according to the above construction can be implemented using the procedure described below. First, the upper gasket 107 is positioned inside the concave section of the sealing plate 103, the composite part including the integrated thermal fuse 108 and PTC element 109 is placed on top of the upper gasket 107, and by then placing the lower gasket 105 against the bottom surface of the sealing plate 103 and fastening the lower gasket 105, the upper gasket 107, the lower electrode plate 109a of the PTC element 109, and the washer 104 with the rivet 106, a composite part that provides the safety functions and the external connection terminals is formed on the sealing plate 103. In addition, because the region inside the concave section of the sealing plate 103 where the thermal fuse 108 and the PTC element 109 are housed is enclosed by the side walls of the concave section and a protruding section 133, a resin material 116 such as a silicon resin or an epoxy resin is used to fill the region and encapsulate the structural elements provided therein. The resin filling is conducted inside the region surrounded by the side walls and the protruding section 133, and consequently filling can be conducted without any resin adhering to the plug 110 that functions as the negative electrode terminal (-). By using this resin filling, the structural elements positioned inside the concave section of the sealing plate 103 are covered, and secured in place by an insulating body, so that even if a vibration or impact is applied to the battery, the structural elements are protected, the insulation is improved together with the thermal conductivity, and thermal conduction to the PTC element 109 and the thermal fuse 108 is improved.

In this manner, the positive electrode lead 112 and the negative electrode lead 113 are connected between the sealing plate 103, which is constructed as a composite part, and the battery case 101 containing the electrode assembly 114. The positive electrode lead 112 and the negative electrode lead 113 are drawn from the electrode assembly 114 and extended externally through holes provided in the frame 102, and are extended far enough to enable the connection operation to be performed easily with the sealing plate 103 positioned outside the battery case 101. Following connection of these leads, the sealing plate 103 is fitted inside the open end of the battery case 101, and as shown in FIG. 14A and FIG. 14B, the positive electrode lead 112 and the negative electrode lead 113 are folded up on top of the frame 102. The outside edges of the sealing plate 103 that is fitted inside the open end of the battery case 101, and the inner peripheral edges of the battery case 101 are laser welded together, thereby securing the sealing plate 103 to the battery case 101.

Subsequently, once electrolyte has been injected into the battery case 101 from the opening in the sealing plate 103, the plug 110 is fitted inside the opening to close the opening, and the plug 110 is then secured to the sealing plate 103 by laser welding. When the insulating plate 111 is then joined to the sealing plate 103 and the battery case 101 so as to close off the top of the sealing plate 103, the terminal plate 108a of the thermal fuse 108 is exposed externally through the positive electrode opening 111a formed in the insulating plate 111, and the top surface of the plug 110 is exposed externally through the negative electrode opening 111b, forming the positive electrode terminal (+) and the negative electrode terminal (-) respectively. As shown in FIG. 13 and FIG. 14A through FIG. 14C, a step having a reduced thickness is formed in the periphery of the insulating plate 111, and as shown by the dashed lines, the outer packaging film 128 formed of a heat shrinkable film or tube is used to cover the battery case 101 including the periphery of the insulating plate 111, forming an external appearance as shown in FIG. 12. This outer packaging film 128 can be formed from a resin film such as PET. Furthermore, by covering the step in the insulating plate 111 with the outer packaging film 128, the upper surface of the insulating plate 111 becomes a smooth single surface with the outer packaging film 128 occupying the step, thereby improving the external appearance and insulation.

As shown in FIG. 12 and FIG. 13, the positive electrode terminal (+) and the negative electrode terminal (-) are formed on the top surface, toward one side of the battery, and consequently, reverse loading of the battery into the battery compartment of the equipment can be prevented. With this battery, connection with the equipment is achieved by pressing the positive electrode terminal (+) and the negative electrode terminal (-) up against probes provided in the equipment, and because the shape of the battery is symmetrical, there is a danger of reverse loading, but because the terminals are positioned to one side as described above, reverse loading is prevented.

In conventional prismatic batteries, the open end of the battery case that contains the power generating element is sealed with a flat sealing plate, and the space between the sealing plate and the electrode assembly is used only for connecting the leads extending from the electrode assembly. But by closing off the opening of the battery case 101 with a sealing plate 103 with a concave section, as in the sixth embodiment, the battery safety functions are provided within the concave section of the sealing plate 103, which offers a more effective use of the space.

The sealing plate 103 is produced by drawing the required material to form the concave section, and then punching out the exterior shape to match the inner dimensions of the battery case 101. By altering the press die used in the punching process, the shape of the sealing plate 103 can be easily matched to batteries in which the width of the short side of the battery differs. In the case of prismatic lithium ion rechargeable batteries, if the width of the short side of the battery is increased, the length of the wound positive and negative electrode plates is increased, and the reactive surface area of the electrode assembly 114 is increased, and as a result, a plurality of battery types with differing widths for the short side of the battery, and differing battery capacities, are configured. In this case, in order to produce the sealing plates 103 for producing each of the various battery types, a plurality of molds need not be prepared to produce a different sealing plate for each battery type, and the plurality of sealing plate varieties can be produced by simply altering the punching die.

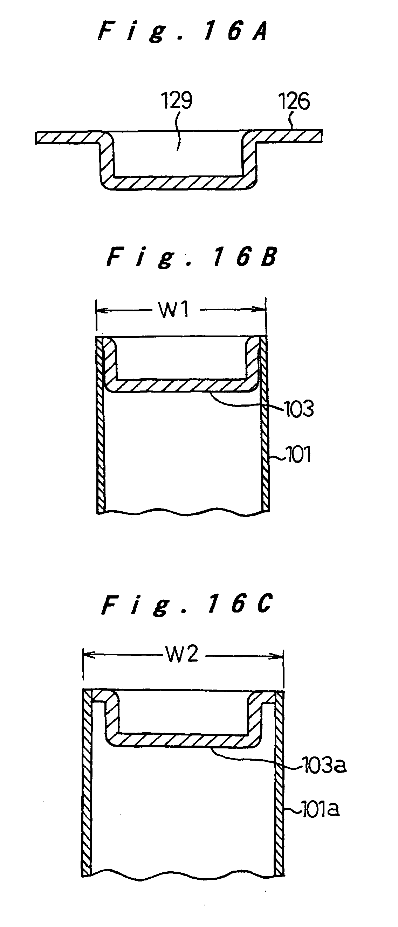

FIG. 16A through FIG. 16C show examples of altering the external dimensions of the sealing plate 103 to produce two types of battery with battery short sides of differing width. As shown in FIG. 16A, if a common drawing mold is used to draw a plate material 126 to form a concave section 129, a flange section is formed around the periphery of the concave section 129. Subsequently, in the case of a battery with a small width W1 for the short side, such as the battery shown in the sixth embodiment, a sealing plate 103 formed by punching through the flange section at a position immediately next to the outside edge of the upstand of the concave section 129, is suitable for fitting in the open end of the battery case 101 with a small width W1 for the short side, as shown in FIG. 16B. In contrast, in the case of a battery in which the width of the short side is increased to W2, the area punched out by the punching die is increased, so that a sealing plate 103a which matches a battery case 101a having the width of the short side of W2 is formed, as shown in FIG. 16C.

In the sixth embodiment described above, the reversible current regulation element provided by the PTC element 109 could also be constructed using a bimetal that deforms at or above a predetermined operating temperature, thereby opening the contact, and then returns to its normal state and closes the contact when the temperature drops. Furthermore, the non-reversible current cutoff element provided by the thermal fuse 108 could also be constructed using a switch employing a shape memory alloy that returns to a memory shape at or above a predetermined operating temperature, thereby opening the contact and cutting off the current circuit.

Furthermore, the thermal fuse 108 and the PTC element 109 are provided within the positive electrode connection line, but they can be provided within the negative electrode connection line. In addition, the thermal fuse 108 and the PTC element 109 can be split between the positive electrode connection line and the negative electrode connection line. Provided the two elements are positioned within the input-output line of the battery, the same effects are exhibited.

Furthermore, in addition to the two fold safety function provided by the PTC element 109 and the thermal fuse 108 described in the sixth embodiment, an abnormal internal pressure discharge structure for discharging abnormal internal pressure externally when the pressure inside the battery case 101 rises abnormally can also be provided, thereby forming a three fold safety function. This abnormal internal pressure discharge structure can use a configuration that utilizes a valve that is operated by internal pressure of the battery, a configuration in which a thin plate section of a clad plate ruptures with the internal pressure, or a configuration in which a section of the battery case 101 is reduced in thickness, either by scribing or imprinting, and this thin-walled section then ruptures with the internal pressure. In a lithium ion rechargeable battery of the embodiment that has been reduced in size and thickness, the abnormal internal pressure discharge structure is preferably a structure that occupies little space, and the configurations shown in FIG. 10 and FIG. 11 are ideal.

Furthermore, the sixth embodiment was described using an example in which a battery case 101 using nickel plated steel was formed in a flat, prismatic shape, but aluminum alloy or stainless steel can also be used, and these cases can also be applied to batteries formed in a cylindrical shape.

### INDUSTRIAL APPLICABILITY

As described above, according to the present invention, by providing, within the structure of a battery itself, a safety function that uses a reversible current regulation element such as a PTC element to prevent increases in the battery temperature resulting from external short-circuits and the like, and a safety function that uses a non-reversible current cutoff element such as a thermal fuse to protect the battery if the temperature rises even further, a non-aqueous electrolyte rechargeable battery with a two fold safety function within the battery itself is provided, and by also providing an additional abnormal internal pressure discharge device, a non-aqueous electrolyte rechargeable battery with a three fold safety function within the battery itself is provided.

## Claims

1. A non-aqueous electrolyte rechargeable battery comprising a reversible current regulation element for regulating current at a predetermined operating temperature and a non-reversible current cutoff element for interrupting current at a predetermined operating temperature, which are disposed in series with a positive electrode connection line and/or a negative electrode connection line connecting a positive electrode or a negative electrode of an electrode assembly housed in said battery, and a positive electrode terminal or a negative electrode terminal exposed externally on said battery.

2. A non-aqueous electrolyte rechargeable battery, wherein a power generating element is housed in a battery case (1) formed in a shape of a cylinder with a closed bottom and having a rectangular cross-section, an open end of said battery case (1) is sealed by a sealing plate (3) with a concave section that protrudes into said case, a top of said sealing plate (3) is closed off with an insulating plate (11), a positive electrode terminal and a negative electrode terminal are exposed externally from said insulating plate (11), and a reversible current regulation element for regulating current at a predetermined operating temperature and a non-reversible current cutoff element for interrupting current at a predetermined operating temperature are disposed in series with a positive electrode connection line and/or a negative electrode connection line connecting said positive electrode terminal or said negative electrode terminal and a positive electrode or a negative electrode of an electrode assembly of said power generating element.

3. The non-aqueous electrolyte rechargeable battery according to either one of claim 1 and claim 2, wherein the operating temperature of said reversible current regulation element is from 80 to 100°C, and the operating temperature of said non-reversible current cutoff element is from 100 to 130°C.

4. The non-aqueous electrolyte rechargeable battery according to either one of claim 1 and claim 2, wherein said reversible current regulation element is a PTC element (9) in which resistance increases rapidly when battery temperature reaches the predetermined operating temperature.

5. The non-aqueous electrolyte rechargeable battery according to either one of claim 1 and claim 2, wherein said reversible current regulation element is a bimetal that deforms and opens a circuit when battery temperature reaches the predetermined operating temperature.

6. The non-aqueous electrolyte rechargeable battery according to either one of claim 1 and claim 2, wherein said non-reversible current cutoff element is a thermal fuse (8) that melts and opens a circuit when battery temperature reaches the predetermined operating temperature.

7. The non-aqueous electrolyte rechargeable battery according to either one of claim 1 and claim 2, wherein said non-reversible current cutoff element is a switch mechanism employing a shape memory alloy that returns to a memory shape and opens a circuit when battery temperature reaches the predetermined operating temperature.

8. The non-aqueous electrolyte rechargeable battery according to claim 2, wherein said reversible current regulation element and said non-reversible current cutoff element are disposed inside said concave section of said sealing plate (3).

9. The non-aqueous electrolyte rechargeable battery according to claim 2, wherein either one of said reversible current regulation element and said non-reversible current cutoff element is disposed inside said concave section of said sealing plate (3), and another one is disposed inside said battery case (1).

10. The non-aqueous electrolyte rechargeable battery according to claim 2, wherein said reversible current regulation element and said non-reversible current cutoff element are disposed inside said battery case (1).

11. The non-aqueous electrolyte rechargeable battery according to claim 9, wherein said reversible current regulation element or said non-reversible current cutoff element disposed inside said battery case (1) is connected between said negative electrode and said negative electrode terminal.

12. The non-aqueous electrolyte rechargeable battery according to claim 9, wherein said reversible current regulation element or said non-reversible current cutoff element disposed inside said battery case (1) is covered with an insulating resin that is resistant to electrolyte.

13. The non-aqueous electrolyte rechargeable battery according to claim 2, wherein said reversible current regulation element and/or said non-reversible current cutoff element is attached to said sealing plate (3) to form an integrated unit.

14. The non-aqueous electrolyte rechargeable battery according to claim 2, further comprising an abnormal internal pressure discharge device for discharging internal pressure externally when said internal pressure of said battery case (1) increases abnormally.

15. The non-aqueous electrolyte rechargeable battery according to claim 14, wherein said abnormal internal pressure discharge device operates when a temperature rise exceeding 100°C occurs, and said non-reversible current cutoff element has operated.

16. A non-aqueous electrolyte rechargeable battery, wherein a power generating element is housed in a battery case (101) formed in a shape of a cylinder with a closed bottom and having an elliptical cross-section, an open end of said battery case (101) is sealed by a sealing plate (103) with a concave section that protrudes into said case, a reversible current regulation element for regulating current at a predetermined operating temperature and a non-reversible current cutoff element for interrupting current at a predetermined operating temperature are connected to a positive electrode connection line and/or a negative electrode connection line that connect a positive electrode lead (112) and a negative electrode lead (113) extending from an electrode assembly (114) of said power generating element to a positive electrode terminal and a negative electrode terminal respectively, said reversible current regulation element and said non-reversible current cutoff element are disposed inside said concave section of said sealing plate (103), and conducting surfaces of structural elements disposed on top of said sealing plate (103) and connected to said positive electrode connection line and said negative electrode connection line are exposed externally as said positive electrode terminal and said negative electrode terminal respectively, through openings formed in an insulating plate that closes over said sealing plate (103).

17. The non-aqueous electrolyte rechargeable battery according to claim 16, wherein the operating temperature of said reversible current regulation element is from 80 to 100°C, and the operating temperature of said non-reversible current cutoff element is from 100 to 130°C.

18. The non-aqueous electrolyte rechargeable battery according to claim 16, wherein said reversible current regulation element is a PTC element (109) in which resistance increases rapidly when battery temperature reaches the predetermined operating temperature.

19. The non-aqueous electrolyte rechargeable battery according to claim 16, wherein said reversible current regulation element is a bimetal that deforms and opens a circuit when battery temperature reaches the predetermined operating temperature.

20. The non-aqueous electrolyte rechargeable battery according to claim 16, wherein said non-reversible current cutoff element is a thermal fuse (108) that melts and opens a circuit when battery temperature reaches the predetermined operating temperature.

21. The non-aqueous electrolyte rechargeable battery according to claim 16, wherein said non-reversible current cutoff element is a switch mechanism employing a shape memory alloy that returns to a memory shape and opens a circuit when battery temperature reaches the predetermined operating temperature.

22. The non-aqueous electrolyte rechargeable battery according to claim 16, wherein said reversible current regulation element and said non-reversible current cutoff element are connected in series, and are joined together as an integrated unit.

23. The non-aqueous electrolyte rechargeable battery according to claim 16, wherein a rivet (106) is secured to said sealing plate (103) by fitting in an opening formed in said sealing plate (103), through a gasket (105) disposed therebetween, and subsequent fastening, thereby forming an electrical connection between an inside of said battery case (101) and a top of said sealing plate (103), and said positive electrode lead (112) or said negative electrode lead (113) is joined to said rivet (106) inside said battery case (101).

24. The non-aqueous electrolyte rechargeable battery according to claim 23, wherein an extension (106a) for lead connection purposes is formed on said rivet (106) inside said battery case (101).

25. The non-aqueous electrolyte rechargeable battery according to claim 23, wherein said reversible current regulation element or said non-reversible current cutoff element is connected electrically to said rivet (106) through a fastening action of said rivet (106).

26. The non-aqueous electrolyte rechargeable battery according to claim 16, wherein required structural elements disposed inside said concave section of said sealing plate (103) are covered with a resin and fixed to said sealing plate (103).

27. The non-aqueous electrolyte rechargeable battery according to claim 26, wherein a protruding wall is formed to surround an area housing said structural elements to be covered with resin.

28. The non-aqueous electrolyte rechargeable battery according to claim 16, wherein elements forming said positive electrode terminal and said negative electrode terminal are positioned toward one side on top of said sealing plate (103), and are exposed externally through openings formed at corresponding positions of said insulating plate (111).

29. The non-aqueous electrolyte rechargeable battery according to claim 16, wherein a step of reduced thickness is formed in a periphery of said insulating plate (111).

30. The non-aqueous electrolyte rechargeable battery according to claim 16, further comprising an abnormal internal pressure discharge device for discharging internal pressure externally when said internal pressure of said battery case (101) increases abnormally.

31. The non-aqueous electrolyte rechargeable battery according to claim 30, wherein said abnormal internal pressure discharge device operates by abnormal internal pressure that accompanies gas generation produced by a temperature increase beyond 100°C.

32. The non-aqueous electrolyte rechargeable battery according to claim 16, wherein said sealing plate (103) is formed by drawing a plate material using a common mold to form said concave section, and then punching out an area surrounding said concave section using a die that corresponds with internal dimensions of said battery case (101).

33. The non-aqueous electrolyte rechargeable battery according to claim 32, wherein said punching out process is conducted to leave a flange of at least 0.01 mm outside upstand sections of said concave section.
